# EUROPEAN PATENT APPLICATION

(11) **EP 4 734 473 A1**
(43) Date of publication of application: **29.04.2026**
(21) Application number: 25211419.4
(22) Date of filing: 27.10.2025
(51) Int. Cl.: H04L 45/74

(54) **SYSTEMS AND METHODS FOR PACKET AGGREGATION**

(30) Priority: 28.10.2024 US 202418928485
(71) Applicant: Avago Technologies International Sales Pte. Limited, Singapore 768923 (SG)
(72) Inventor: Aviram, Yariv, Pardes Hana (IL); Wolach, Oren Issac, 4428860 Kfar Saba (IL); Baum-Mizrachi, Tal, Kfar Saba (IL); Granot, Asaf, Jerusalem (IL); Tam, Amir, Bat Yam (IL); Sheffer, Noam, Ra'anana (IL); Tsadik, Ohad, Kfar Saba (IL); Harel, Jacob, Hod HaSharon (IL); Koren, Asaf, Netanya (IL); Bromstein, Raz, Hod HaSharon (IL); Zichroni, Pavel, 5846401 Holon (IL); Cohen, Tal, Givatayim (IL)
(74) Representative: Dilg, Haeusler, Schindelmann Patentanwaltsgesellschaft mbH

(57) **Abstract**

The subject technology is directed to an apparatus for managing data packets in a network. In an embodiment, the apparatus comprises a first memory configured to store a plurality of packets. The apparatus further comprises a queue manager configured to receive a plurality of packet descriptors and generate an aggregated packet descriptor based on the plurality of packet descriptors. The apparatus further comprises a traffic manager coupled to the queue manager. The traffic manager is configured to determine a transmission order for the plurality of packets based on the aggregated packet descriptor. A transmitter is coupled to the traffic manager and configured to transmit the plurality of packets based on the determined transmission order. This configuration enables efficient packet storage, aggregation, and transmission scheduling, optimizing overall network performance and resource utilization. There are other embodiments as well.

## Description

### FIELD OF INVENTION

The subject technology is directed to network communication systems and methods.

### BACKGROUND OF THE INVENTION

With the increasing scale and complexity of modem network communication systems, there is a growing demand for efficient methods to manage and transmit large volumes of data. As networks become more congested, handling the storage and transmission of millions of packets per second becomes challenging. Applications such as cloud services, data centers, and telecommunications infrastructure rely on the rapid and reliable transmission of packets to maintain system performance. However, managing and transmitting data packets efficiently requires effective strategies for packet storage, scheduling, and transmission order determination.

Some approaches for packet management may involve storing each packet with its associated packet descriptor individually. As the volume of network traffic grows, these approaches lead to inefficient use of memory and processing delays, especially in high-throughput environments. As the number of packets increases, these systems struggle with memory fragmentation, inefficient retrieval of packet data, and bottlenecks in scheduling packet transmission. Additionally, determining the optimal order of packet transmission becomes increasingly difficult, especially when packets have varying priorities, sizes, and latency requirements. Poor transmission scheduling can lead to network congestion and inefficient utilization of available bandwidth.

Various approaches for improving packet management in network communication have been explored, but they are often insufficient. It is important to recognize the need for new and improved systems and methods that can more effectively manage packet storage, scheduling, and transmission in modern communication networks.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Figure 1 is a schematic block diagram illustrating a system for managing data packets, in accordance with various embodiments of the subject technology.
Figure 2 is a schematic diagram illustrating the structure of data packets, in accordance with various embodiments of the subject technology.
Figure 3 is a schematic block diagram illustrating a linked list configuration for storing data packets, in accordance with various embodiments of the subject technology.

### DETAILED DESCRIPTION OF THE INVENTION

The subject technology is directed to an apparatus for managing data packets in a network. In an embodiment, the apparatus comprises a first memory configured to store a plurality of packets. The apparatus further comprises a queue manager configured to receive a plurality of packet descriptors and generate an aggregated packet descriptor based on the plurality of packet descriptors. The apparatus further comprises a traffic manager coupled to the queue manager. The traffic manager is configured to determine a transmission order for the plurality of packets based on the aggregated packet descriptor. A transmitter is coupled to the traffic manager and configured to transmit the plurality of packets based on the determined transmission order. This configuration enables efficient packet storage, aggregation, and transmission scheduling, optimizing overall network performance and resource utilization. There are other embodiments as well.

As mentioned above, packet descriptors play an important role in packet management systems. In these systems, each packet is associated with a packet descriptor that contains metadata, such as packet size, source, destination, and storage location. The packet descriptors are processed by the queue manager to determine how packets are stored and transmitted within the network. In some approaches, packet descriptors are handled individually, which requires each descriptor to be processed separately. This method can lead to inefficiencies, particularly in environments that handle large numbers of packets, where managing individual descriptors results in increased memory usage and processing overhead.

A problem in these approaches arises due to the limited capacity for packet aggregation within a single packet descriptor. In some implementations, only a small number of packets (e.g., four), can be aggregated into a single descriptor because the metadata for each packet must be stored within the descriptor itself. As the number of packets increases, the system must handle more descriptors, which complicates the process of scheduling packets for transmission. The limited aggregation capacity also leads to memory fragmentation, as packets are written into memory in smaller, non-aligned segments, which reduces the efficiency of memory utilization. This issue is pronounced in high-throughput environments, where memory fragmentation can result in underutilized memory segments and bottlenecks in data transmission.

It is to be appreciated that the subject technology, in various embodiments, addresses these challenges by providing systems and methods for more efficient packet aggregation and memory management.

The following description is presented to enable one of ordinary skill in the art to make and use the invention and to incorporate it in the context of particular applications. Various modifications, as well as a variety of uses in different applications, will be readily apparent to those skilled in the art, and the general principles defined herein may be applied to a wide range of embodiments. Thus, the subject technology is not intended to be limited to the embodiments presented but is to be accorded the widest scope consistent with the principles and novel features disclosed herein.

In the following detailed description, numerous specific details are set forth in order to provide a more thorough understanding of the subject technology. However, it will be apparent to one skilled in the art that the subject technology may be practiced without necessarily being limited to these specific details. In other instances, well-known structures and devices are shown in block diagram form, rather than in detail, in order to avoid obscuring the subject technology.

The reader's attention is directed to all papers and documents which are filed concurrently with this specification and which are open to public inspection with this specification, and the contents of all such papers and documents are incorporated herein by reference. All the features disclosed in this specification, (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the Claims herein is not intended to invoke the provisions of 35 U.S.C. 112, Paragraph 6.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

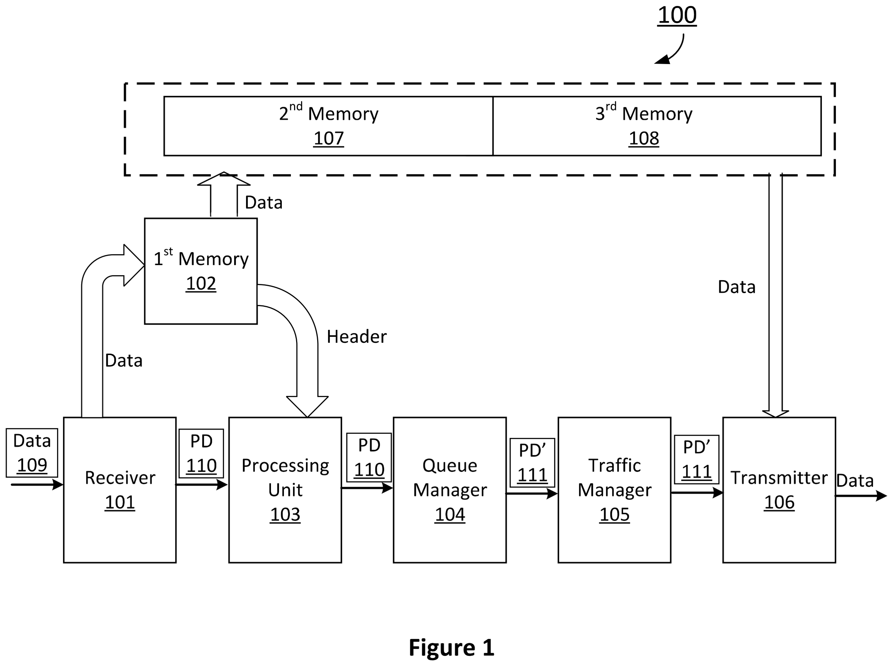

Figure 1 is a schematic block diagram illustrating a system 100 for managing data packets, in accordance with various embodiments of the subject technology. This diagram merely provides an example, which should not unduly limit the scope of the claims. One of ordinary skill in the art would recognize many variations, alternatives, and modifications.

In various implementations, system 100 may be applied in a wide range of network communication environments, such as data centers, cloud computing infrastructures, telecommunications networks, Internet of Things (IoT) systems, and/or the like. It may be integrated into larger network architectures, working alongside other network management systems to handle packet processing, memory allocation, and transmission scheduling. In some embodiments, system 100 may be implemented as part of a broader hardware-software combination, or it may be deployed as a standalone component within a network switch, router, or other communication devices.

As shown, system 100 may be configured to receive a plurality of packets 109. For instance, the term "packet" or "data packet" may refer to a unit of data transmitted across a network. The plurality of packets 109 may originate from a variety of sources, such as client devices, remote servers, edge devices in cloud computing environments, IoT networks, telecommunications systems, and/or the like. Packets may vary in size depending on the network protocols being used and may be transmitted in segments that are then reassembled at their destination. For example, the plurality of packets 109 may conform to protocols such as transmission control protocol/Internet protocol (TCP/IP), user datagram protocol (UDP), Ethernet, Wi-Fi, cellular network protocols (e.g., 4G, 5G), and/or the like. These protocols dictate the structure and size of the packets, as well as the rules for how they are transmitted across the network. In some examples, the plurality of packets 109 includes a first packet and a second packet.

The term "receiver" may refer to any hardware or software component capable of receiving data packets from a network or external data source. Receiver 101 may include, without limitation, a network interface card (NIC), a radio transceiver, a network switch, a communication interface, and/or the like. In some examples, receiver 110 may be configured to receive data at the media access control (MAC) layer and convert it into a format suitable for further processing within the system.

In various implementations, receiver 101 may be configured to receive the plurality of packets 109 and generate a plurality of packet descriptors 110. For example, the term "packet descriptor" may refer to a data structure that contains metadata about a data packet. Packet descriptors may include information such as the packet's length, memory location, source and destination addresses, protocol information, priority, error-checking details (e.g., checksum or cyclic redundancy check), and/or the like. The plurality of packet descriptors 110 may be associated with the plurality of packets 109. For instance, the plurality of packet descriptors 110 comprises a first packet descriptor associated with the first packet and a second packet descriptor associated with the second packet. Packet descriptors facilitate the processing and organization of packets within the system by providing the necessary information in a structured manner.

According to some embodiments, system 100 includes first memory 102, which may be coupled to receiver 101. First memory 102 may be configured to store the plurality of packets 109. For example, the term "memory" may refer to any type of volatile or non-volatile memory suitable for temporarily or persistently storing data. Examples of memory may include, without limitation, random-access memory (RAM), static RAM (SRAM), flash memory, solid-state drive (SSD), pseudostatic random-access memory (PSRAM), and/or the like. For instance, first memory 102 may include an internal, high-speed memory such as SRAM, DRAM, or any other memory type suitable for fast access to data packets. In some examples, first memory 102 includes an ingress internal packet memory. For instance, first memory 102 is configured to temporarily store data (e.g., the plurality of packet 109) before they are processed or transmitted.

In various examples, system 100 further includes processing unit 103. For example, the term "processing unit" may refer to any hardware or software component configured to analyze, modify, or manage data packets and their associated metadata. Processing unit 103 may include, without limitation, central processing units (CPUs), digital signal processors (DSPs), field-programmable gate arrays (FPGAs), network processors, application-specific integrated circuits (ASICs), and/or the like. Processing unit 103 may be configured to execute various operations to process, organize, and manage the flow of packets within system 100. For instance, processing unit 103 may classify packets based on priority or protocol, extract and modify packet headers, or manage packet descriptors to ensure efficient routing and transmission through the network.

In some implementations, system 100 further includes queue manager 104. For instance, the term "queue manager" may refer to any hardware or software component responsible for managing the data flow and storage within a system. In various examples, queue manager 104 is responsible for determining where the packet data should be stored within the system. For example, queue manager 104 may copy data from first memory 102 and decide whether to write the data to another memory location for further processing or transmission. This helps prevent overloading first memory 102 and ensures efficient use of the system's memory resources.

In some implementations, queue manager 104 is configured to determine whether to store the data packets (e.g., the first packet) in second memory 107 or third memory 108. Second memory 107 may include an internal memory. For instance, the term "internal memory" may refer to any type of memory that is directly integrated into or closely coupled with the system's processing units. Examples of internal memory may include, without limitation, SRAM, DRAM, cache memory, embedded DRAM (eDRAM), PSRAM, and/or the like. In some examples, second memory 107 includes an egress internal packet memory. Second memory 107 allows for fast access and low-latency data retrieval, ensuring efficient processing and immediate transmission when required.

Third memory 108 may include an external memory. For instance, the term "external memory" may refer to any type of memory that is not directly integrated into the system's processing units but is instead connected through a bus or other communication interface. Examples of external memory may include, without limitation, DRAM, double data rate memory (DDR), flash memory, SSD, hard disk drives (HDD), non-volatile memory (NVM), and/or the like. External memory may be slower compared to internal memory but offers higher storage capacity, making it suitable for bulk data or lower-priority packets that do not require immediate access.

The decision of where to store the packet data depends on various factors such as packet priority, packet size, and the availability of memory resources. Queue manager 104 may evaluate real-time conditions to make the decisions. For example, if second memory 107 is nearing capacity or occupied with high-priority packets, queue manager 104 may offload less critical data to third memory 108, preventing delays in the transmission for urgent data. In other examples, queue manager 104 might determine that certain queues are accumulating too many packets and opt to store those in third memory 108 to avoid filling up second memory 107 with data that doesn't require immediate access. Queue manager 104 may dynamically monitor memory usage and adjust its decisions based on real-time system conditions, shifting packet storage between second memory 107 and third memory 108 to ensure optimal performance.

In various examples, queue manager 104 is configured to receive the plurality of packet descriptors 110 and generate aggregated packet descriptor (APD) 111 based on the plurality of packet descriptors 110. For example, queue manager 104 may consolidate multiple packet descriptors (e.g., the plurality of packet descriptors 109) into a single aggregated packet descriptor to optimize memory usage and streamline packet handling. A single aggregated packet descriptor can describe multiple packets, meaning that transmission scheduling (e.g., performed by traffic manager 105) can be done on a per-APD basis rather than a per-packet basis.

In some embodiments, the system may aggregate five or more packets within a single packet descriptor, with configurations supporting the aggregation of 64 packets or more, depending on the implementation. In some cases, the system may aggregate packets up to a predefined size limit (e.g., 1024 bytes) and encapsulate them into a single APD, significantly reducing the scheduling overhead. The enhanced aggregation allows the system to handle larger data batches, reducing the number of descriptors needed for scheduling and improving overall packet management. This is beneficial in high-traffic environments where system resources need to be used efficiently to avoid delays and bottlenecks.

The APD serves as a comprehensive reference that encapsulates all relevant information about a group of packets for efficient processing and transmission. In some implementations, aggregated packet descriptor 111 may include information such as the total number of packets represented, the cumulative packet length, memory addresses of where the aggregated packets are stored, pointers to relevant metadata, packet priorities, and/or the like. For instance, aggregated packet descriptor 111 includes a field indicating a total number of packets in the aggregated packets. By controlling the total size of each APD (e.g., in bytes), the system can effectively regulate the rate at which packet descriptors are sent for transmission.

Aggregated packet descriptor 111 allows the system to quickly reference a group of packets without needing to process each packet descriptor separately, improving memory efficiency. For example, by consolidating packets into a single descriptor, the system reduces the need for multiple memory accesses, as a single read operation can retrieve all the necessary information for an entire group of packets. By reducing the number of individual packet descriptors that need to be processed, system 100 can free up memory and processing power, which can then be allocated to handling new incoming packets. This not only improves the system's capacity to manage large amounts of data but also enhances responsiveness in real-time applications.

In various implementations, system 100 further includes traffic manager 105, which may be coupled to queue manager 104. For example, the term "traffic manager" may refer to any hardware or software component responsible for managing the transmission and scheduling of data packets through the network. In some embodiments, traffic manager 105 may be configured to receive aggregated packet descriptor 111 and determine a transmission order for the plurality of packets 109 based on aggregated packet descriptor 111. For instance, the term "transmission order" may refer to the sequence or priority in which packets are sent from the system over the network. The transmission order may be determined based on various factors, such as the priority level, time-sensitive data requirements, network bandwidth availability, packet size, and/or the like.

In some embodiments, system 100 further includes transmitter 106, which may be coupled to traffic manager 105. For instance, the term "transmitter" may refer to any hardware or software component responsible for sending data packets from the system over the network. In some examples, transmitter 106 may be configured to transmit the plurality of packets 109 based on the transmission order determined by traffic manager 105, ensuring that the packets are transmitted according to the scheduling and priority rules set by the system. In various embodiments, transmitter 106 sends the packets to their intended destination, which could be another network device, a server, or any other endpoint in the communication system. Transmitter 106 may support various transmission protocols, such as TCP/IP, UDP, Ethernet, Wi-Fi, cellular network protocols (e.g., 4G, 5G), or other data communication protocols, ensuring compatibility with different network environments.

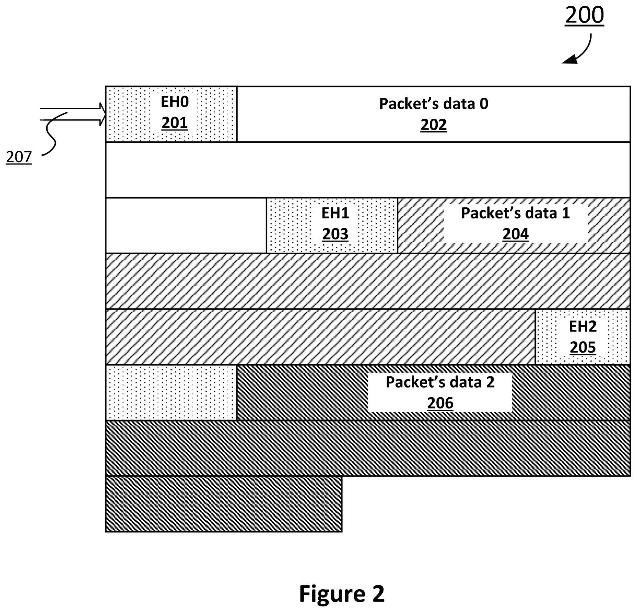

Figure 2 is a schematic diagram illustrating the structure of data packets 200, in accordance with various embodiments of the subject technology. This diagram merely provides an example, which should not unduly limit the scope of the claims. One of ordinary skill in the art would recognize many variations, alternatives, and modifications.

In various implementations, data packets 200 may represent a group of packets that have been aggregated together for more efficient processing, storage, and transmission within the system (e.g., system 100 of Figure 1). Aggregating packets allows the system to handle multiple packets at once, reducing the overhead associated with processing and transmitting individual packets. In some cases, these aggregated packets may be stored in an external memory (e.g., third memory 108 of Figure 1).

As shown, data packets 200 may include a first packet, a second packet, and a third packet. Each packet may include a header and its associated packet data. For instance, the term "header" may refer to a metadata section located at the beginning of a packet that contains essential information about the packet and its contents. The header may include, without limitation, fields such as the source and destination addresses, packet length, protocol type, sequence numbers, time-to-live (TTL) values, and/or other control information. The header may be used for routing, handling, and processing the packet throughout the system.

For example, the term "packet data" may refer to the payload or content of a packet, which contains the actual data being transmitted. Packet data may include, without limitation, application data, file transfers, multimedia content, sensor data, or any other type of digital information. In various examples, packet data may be segmented into smaller portions for efficient transmission and reassembled at the destination.

In various implementations, the first packet includes first header 201 (e.g., EH0) and first packet data 202 (e.g., packet's data 0). The second packet includes second header 203 (e.g., EH1) and second packet data 204 (e.g., packet's data 1). The third packet includes third header 205 (e.g., EH2) and third packet data 206 (e.g., packet's data 2). In this structure, each packet is preceded by a header (EH) of a certain length (e.g., 8 bytes). The header contains metadata associated with the packet, such as packet length, memory location, priority level, and/or the like. After the embedded header, the packet data is written into memory in sequential order.

In some examples, the structure of data packets 200 is consecutive, where one packet's data is followed by the next packet's header, except for the last packet. For example, first header 201 is immediately followed by first packet data 202, which is then followed by second header 203, and so on. This arrangement ensures that the system can quickly retrieve and process both the header and packet data in sequence, without needing to search through memory to locate relevant information.

Once the headers and packet data are stored in memory, the system may utilize an aggregated packet descriptor (e.g., aggregated packet descriptor 111) to reference the entire group of aggregated packets. For example, the aggregated packet descriptor may include pointer 207 pointing to the start of the aggregated group, referencing first header 201, and subsequently the corresponding packet data. This allows the system to manage and transmit the aggregated packets as a single unit, reducing the overhead associated with handling each packet individually. The APD may include cumulative information, such as the total packet count, the total length of all packets, or any necessary pointers for retrieving the packets from memory.

By leveraging packet descriptor aggregation, the system can accumulate multiple packets or fragments of packets (e.g., 128 bytes of data) and write them into memory (e.g., DDR) as a single continuous block. This eliminates the need to perform individual write accesses for each packet, increasing the overall efficiency and utilization of memory resources. This approach allows for long, aligned write operations into the memory, improving its utilization and efficiency. As a result, the system can handle high data throughput more effectively while minimizing memory overhead and enhancing performance in high-traffic environments.

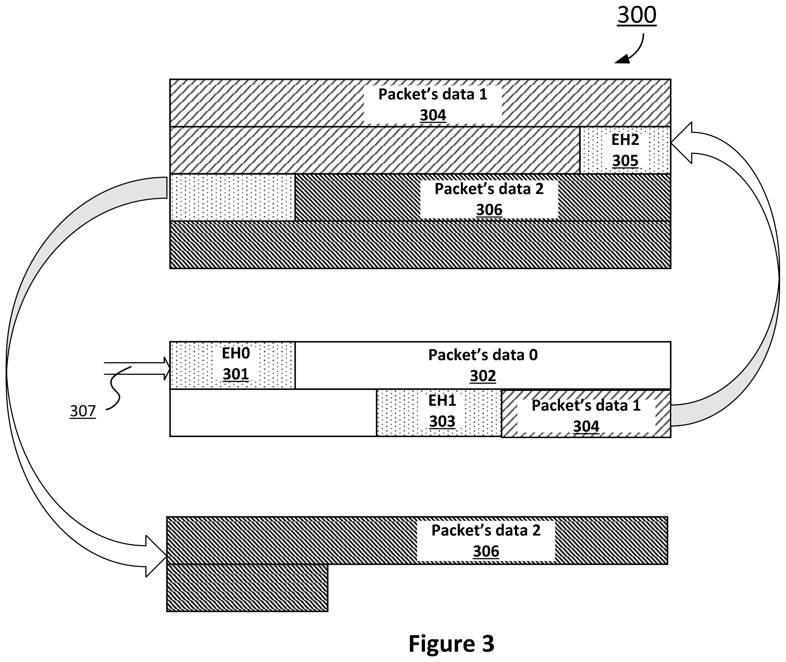

Figure 3 is a schematic block diagram illustrating a linked list configuration for storing data packets 300, in accordance with various embodiments of the subject technology. This diagram merely provides an example, which should not unduly limit the scope of the claims. One of ordinary skill in the art would recognize many variations, alternatives, and modifications. In various implementations, data packets 300 may represent a group of packets that have been aggregated together for more efficient processing, storage, and transmission within the system (e.g., system 100 of Figure 1). For instance, these aggregated packets may be stored in an internal memory (e.g., second memory 107 of Figure 1).

In various embodiments, data packets 300 may be stored in a linked list configuration. For instance, the term "linked list" or "linked list configuration" may refer to a data structure where each element (e.g., data packet) contains a pointer or reference to the next element in the sequence. As shown in Figure 3, data packets 300 may include a first packet, a second packet, and a third packet, each comprising a header and its associated packet data. For instance, the first packet includes first header 301 (e.g., EH0) and first packet data 302 (e.g., packet's data 0). The second packet includes second header 303 (e.g., EH1) and second packet data 304 (e.g., packet's data 1). The third packet includes third header 305 (e.g., EH2) and third packet data 306 (e.g., packet's data 2).

In some examples, each header stores metadata related to the corresponding packet (e.g., length, memory location, priority, etc.). The linking of the packets in the sequence may be managed by a separate hardware element, which maintains pointers to the next packet in the chain. For instance, the hardware element may manage a pointer that links the first packet to the second packet, and so on. This sequence continues until the last packet (e.g., the third packet), where the pointer associated with the last packet may indicate the end of the chain.

The use of a linked list configuration allows for flexible memory management. Because the packets do not need to be stored contiguously in physical memory, the system can allocate available memory efficiently, even in cases where memory is fragmented. For example, first packet data 302 and second packet data 304 may be stored in different regions of the internal memory (e.g., the second memory), but the system can traverse from one to the other using the pointers stored in the headers. This structure minimizes memory waste and maximizes the utilization of available storage resources.

The linked list configuration also simplifies packet management. For instance, when the system processes data packets 300, it can follow the sequence of pointers from one packet to the next without needing to load all packets into contiguous memory locations. This is beneficial in high-traffic environments where large numbers of packets are received and transmitted simultaneously. The system can efficiently retrieve and process packets in the correct order without the need for complex memory rearrangements. Furthermore, this configuration enables continuous write operations into the memory (e.g., PSRAM), allowing better use of memory segments. Since the system no longer needs to leave unutilized segments at the end of each packet, memory resources can be allocated more effectively, reducing waste and improving overall memory efficiency.

Once the headers and packet data are stored in memory, the system may utilize an aggregated packet descriptor (e.g., aggregated packet descriptor 111) to reference the entire group of aggregated packets. The aggregated packet descriptor may include pointer 307 pointing to first header 301 in the linked list, allowing the system to begin processing the sequence of packets. The aggregated packet descriptor may include cumulative information, such as the total packet count, the total length of all packets, or any necessary pointers for retrieving the packets from memory. By referencing the aggregated packet descriptor, the system can manage the entire group of packets as a single unit, reducing the overhead associated with handling individual packets.

While the above is a full description of the specific embodiments, various modifications, alternative constructions and equivalents may be used. Therefore, the above description and illustrations should not be taken as limiting the scope of the subject technology which is defined by the appended claims.

## Claims

1. An apparatus comprising:
a first memory configured to store a plurality of packets, the plurality of packets comprising a first packet;
a queue manager configured to receive a plurality of packet descriptors and generate an aggregated packet descriptor based on the plurality of packet descriptors, the plurality of packet descriptors comprising a first packet descriptor, the first packet descriptor being associated with the first packet;
a traffic manager coupled to the queue manager, the traffic manager being configured to receive the aggregated packet descriptor and determine a transmission order for the plurality of packets based on the aggregated packet descriptor; and
a transmitter coupled to the traffic manager, the transmitter being configured to transmit the plurality of packets based on the transmission order;
wherein the aggregated packet descriptor comprises a field indicating a total number of packets in the plurality of packets.

2. The apparatus of claim 1, wherein
the queue manager is configured to determine whether to store the first packet in a second memory or a third memory.

3. The apparatus of claim 2, wherein
the second memory comprises an internal memory.

4. The apparatus of claim 2 or 3, wherein
the third memory comprises an external memory.

5. The apparatus of any one of the claims 2 to 4, wherein
the second memory is configured to store the plurality of packets in a linked list configuration.

6. The apparatus of any one of the claims 1 to 5, wherein
the first packet comprises a first header, the first header comprises a first packet length of the first packet;
wherein in particular
the aggregated packet descriptor comprises a first pointer associated with the first header.

7. The apparatus of any one of the claims 1 to 6, wherein
the aggregated packet descriptor is associated with the plurality of packets.

8. An apparatus comprising:
a receiver configured to receive a plurality of packets and generate a plurality of packet descriptors, the plurality of packets comprising a first packet, the plurality of packet descriptors comprising a first packet descriptor, the first packet descriptor being associated with the first packet;
a first memory coupled to the receiver, the first memory being configured to store the plurality of packets;
a queue manager configured to receive a plurality of packet descriptors and generate an aggregated packet descriptor based on the plurality of packet descriptors;
a traffic manager coupled to the queue manager, the traffic manager being configured to receive the aggregated packet descriptor and determine a transmission order for the plurality of packets based on the aggregated packet descriptor; and
a transmitter coupled to the traffic manager, the transmitter being configured to transmit the plurality of packets based on the transmission order;
wherein the aggregated packet descriptor comprises a field indicating a total number of packets in the plurality of packets.

9. The apparatus of claim 8, wherein
the queue manager is configured to determine whether to store the first packet in a second memory or a third memory.

10. The apparatus of claim 9, comprising at least one of the following features:
(A) the second memory comprises an internal memory;
(B) the third memory comprises an external memory; and
(C) the second memory is configured to store the plurality of packets in a linked list configuration.

11. The apparatus of any one of the claims 8 to 10, wherein
the first packet comprises a first header, the first header comprises a first packet length of the first packet;
wherein in particular the aggregated packet descriptor comprises a first pointer associated with the first header.

12. The apparatus of any one of the claims 8 to 11, wherein
the aggregated packet descriptor comprises a total length of the plurality of packets.

13. A method comprising:
storing a plurality of packets in a first memory, the plurality of packets comprising a first packet;
receiving, by a queue manager, a plurality of packet descriptors, the plurality of packet descriptors comprising a first packet descriptor associated with the first packet; generating, by the queue manager, an aggregated packet descriptor based on the plurality of packet descriptors;
determining, by a traffic manager, a transmission order for the plurality of packets based on the aggregated packet descriptor; and
transmitting, by a transmitter, the plurality of packets based on the transmission order.

14. The method of claim 13, further comprising
determining, by the queue manager, whether to store the first packet in a second memory or a third memory.

15. The method of claim 14, wherein
the second memory comprises an internal memory and the third memory comprises an external memory;
and/or
the aggregated packet descriptor comprises a field indicating a total number of packets in the plurality of packets.
